(19) Europäisches Patentamt / European Patent Office / Office européen des brevets

(11) **EP 4 436 033 A1**

(12) **EUROPEAN PATENT APPLICATION**
published in accordance with Art. 153(4) EPC

(43) Date of publication:
**25.09.2024 Bulletin 2024/39**

(21) Application number: **21964120.6**

(22) Date of filing: **15.11.2021**

(51) International Patent Classification (IPC):
*H02P 27/06* (2006.01)

(52) Cooperative Patent Classification (CPC):
**H02P 27/06**

(86) International application number:
**PCT/JP2021/041867**

(87) International publication number:
**WO 2023/084766 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TMEIC Corporation**
**Tokyo 104-0031 (JP)**

(72) Inventors:
• **MATSUMOTO, Yasuaki**
**Tokyo 104-0031 (JP)**
• **OGINO, Hiroshi**
**Tokyo 104-0031 (JP)**
• **ANDO, Akinobu**
**Tokyo 104-0031 (JP)**

(74) Representative: **Winter, Brandl - Partnerschaft mbB**
**Alois-Steinecker-Straße 22**
**85354 Freising (DE)**

(54) **THYRISTOR STARTING DEVICE**

(57) A converter controller (8) of a thyristor starter includes: a current controller (14) that generates a voltage command value of an output voltage of a converter (1) by performing a control operation using an integral element of a deviation of a direct current with respect to a current command value; a corrector (15) that adds a correction value to the voltage command value; and a control angle calculator (16) that calculates a phase control angle of a thyristor in the converter (1) based on the voltage command value to which the correction value is added. In an intermittent commutation mode, the correction value is set to increase as a rotation speed of a synchronous machine increases.

FIG.3

EP 4 436 033 A1

## Description

TECHNICAL FIELD

The present disclosure relates to a thyristor starter.

BACKGROUND ART

Thyristor starters for starting synchronous machines such as power generators and electric motors have been developed (for example, see International publication No. WO2014/033849 (PTL 1)). A thyristor starter includes: a converter that converts alternating-current (AC) power into direct-current (DC) power; a DC reactor that smooths the DC power; and an inverter that converts DC power supplied from the converter through the DC reactor into AC power of a variable frequency and supplies the AC power to a synchronous machine. By controlling the AC power supplied to the synchronous machine, the synchronous machine in the stopped state can be started and driven at a prescribed rotation speed.

CITATION LIST

PATENT LITERATURE

PTL 1: International publication No. WO2014/033849

SUMMARY OF INVENTION

TECHNICAL PROBLEM

In the above-described thyristor starter, the induced voltage generated in the synchronous machine is relatively low when the synchronous machine is started or operates at a low speed, with the result that commutation of the inverter (shift of the current) may fail. For this reason, when the synchronous machine is started and operates at a low speed, the thyristor starter adopts "intermittent commutation" in which commutation of the inverter is performed in the state in which the direct current output from the converter is intermittently set to zero.

In the intermittent commutation, generally, the phase control angle of the converter is narrowed simultaneously with the commutation command for the inverter to thereby set the direct current flowing through the DC reactor to be zero once, and then, the thyristor of the inverter to be commutated is again supplied with a gate pulse for commutation. Then, after an elapse of a certain time period (corresponding to a time period required for arc extinction in the thyristor of the inverter) during which the direct current becomes zero, narrowing of the phase control angle is undone in the converter, and controlling the firing phase to set the direct current to coincide with the current command value is resumed. Thereby, a direct current starts to flow through the DC reactor again.

The current flowing through the DC reactor depends on the difference between the DC voltage across output terminals of the converter and the DC voltage across input terminals of the inverter. The DC voltage across the input terminals of the inverter increases as the rotation speed of the synchronous machine increases. Thus, when the constant used to control the firing phase of the converter is fixed, the responsiveness for controlling the direct current to coincide with the current command value decreases as the rotation speed of the synchronous machine increases.

The present disclosure has been made to solve the above-described problems, and an object of the present disclosure is to provide a thyristor starter capable of improving the responsiveness for controlling a direct current flowing through a DC reactor during intermittent commutation.

SOLUTION TO PROBLEM

According to an aspect of the present disclosure, a thyristor starter that starts a synchronous machine includes a converter, a DC reactor, an inverter, and a controller. The converter converts AC power into DC power. The DC reactor smooths the DC power. The inverter converts the DC power supplied from the converter through the DC reactor into AC power of a variable frequency and supplies the AC power to the synchronous machine. The controller controls a firing phase of a thyristor in the converter such that a direct current flowing through the DC reactor coincides with a current command value. The thyristor starter accelerates the synchronous machine in a stopped state to a prescribed rotation speed by sequentially adopting a first mode and a second mode. In the first mode, the thyristor starter performs commutation of the inverter by intermittently setting the direct current to zero. In the second mode, the thyristor starter performs commutation of the inverter by an induced voltage of the synchronous machine. The controller includes a current controller, a corrector, and a control angle calculator. The current controller generates a voltage command value for an output voltage of the converter by performing a control operation using an integral element of a deviation of the direct current with respect to the current command value. The corrector adds a correction value to the voltage command value. The control angle calculator calculates a phase control angle of the thyristor in the converter based on the voltage command value to which the correction value is added. In the first mode, the correction value is set to increase as the rotation speed of the synchronous machine increases.

ADVANTAGEOUS EFFECTS OF INVENTION

According to the present disclosure, the responsiveness for controlling the direct current flowing through the DC reactor during intermittent commutation can be improved.

BRIEF DESCRIPTION OF DRAWINGS

Fig. 1 is a circuit block diagram showing a configuration of a thyristor starter according to a first embodiment.

Fig. 2 is a time chart showing an operation of the thyristor starter shown in Fig. 1.

Fig. 3 is a circuit block diagram showing a configuration of a converter controller shown in Fig. 1.

Fig. 4 is a circuit block diagram showing a configuration of a converter controller included in a thyristor starter according to a reference embodiment.

Fig. 5 is a diagram showing a difference between a DC voltage across a positive-side output terminal and a negative-side output terminal of a converter and a DC voltage across a positive-side input terminal and a negative-side input terminal of an inverter.

Fig. 6 is a diagram showing an output of an integrator.

Fig. 7 is a circuit block diagram showing a configuration of a thyristor starter according to a second embodiment.

Fig. 8 is a circuit block diagram showing a configuration of a converter controller shown in Fig. 7.

Fig. 9 is a circuit block diagram showing a configuration of a converter controller included in a thyristor starter according to a third embodiment.

DESCRIPTION OF EMBODIMENTS

The following describes embodiments of the present disclosure in detail with reference to the accompanying drawings. While a plurality of embodiments will be described below, it has been originally intended at the time of filing of the present application to appropriately combine configurations described in the embodiments. In the accompanying drawings, the same or corresponding portions are denoted by the same reference characters, and the description thereof will not be repeated.

[First Embodiment]

(Configuration of Thyristor Starter)

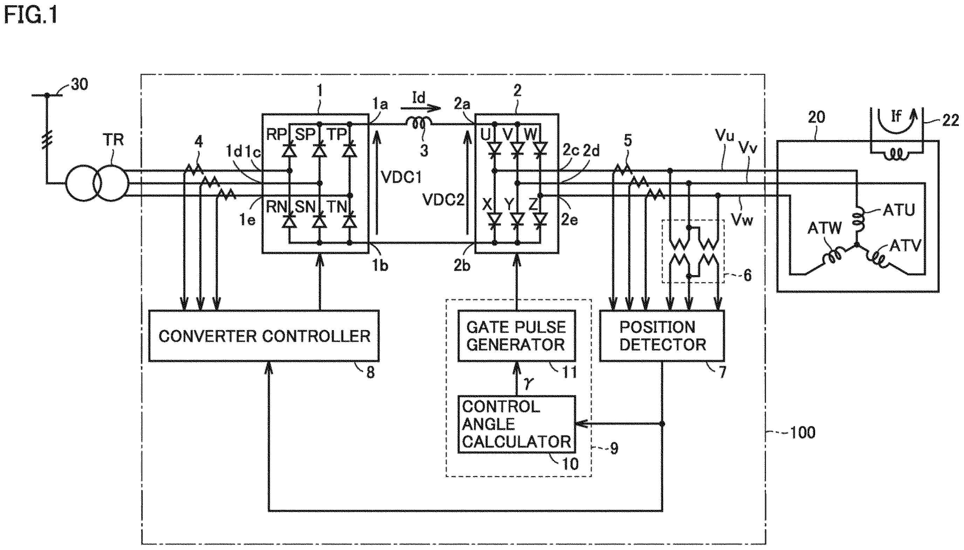

Fig. 1 is a circuit block diagram showing a configuration of a thyristor starter according to the first embodiment. A thyristor starter 100 according to the first embodiment starts a synchronous machine 20 by accelerating synchronous machine 20 in the stopped state to a prescribed rotation speed. In the following description, the prescribed rotation speed will be also referred to as a "rated rotation speed".

Synchronous machine 20 includes: a stator having armature windings ATU, ATV, and ATW; and a rotor having a field winding 22. Synchronous machine 20 is, for example, coupled to a gas turbine of a thermal power plant and rotationally driven by the gas turbine.

Thyristor starter 100 is connected to the secondary side of a transformer TR. The primary side of transformer TR is connected to an AC power supply 30. Transformer TR converts the three-phase AC voltage supplied from AC power supply 30 into a three-phase AC voltage having a prescribed voltage value and supplies the converted three-phase AC voltage to thyristor starter 100.

Thyristor starter 100 includes a converter 1, a DC reactor 3, and an inverter 2. Converter 1 is a three-phase full-wave rectifier including at least six thyristors RP, SP, TP, RN, SN, and TN. Thyristors RP, SP, and TP have cathodes each connected to a positive-side output terminal 1a and also have anodes respectively connected to input terminals 1c, 1d, and 1e. Thyristors RN, SN, and TN have cathodes respectively connected to input terminals 1c, 1d, and 1e and also have anodes each connected to a negative-side output terminal 1b. Converter 1 converts the three-phase AC power from transformer TR into DC power having a variable voltage.

DC reactor 3 is connected between positive-side output terminal 1a of converter 1 and a positive-side input terminal 2a of inverter 2. DC reactor 3 smooths a direct current Id output from converter 1. Negative-side output terminal 1b of converter 1 and a negative-side input terminal 2b of inverter 2 are connected to each other. Another DC reactor 3 may be connected between negative-side output terminal 1b of converter 1 and negative-side input terminal 2b of inverter 2.

Three output terminals 2c, 2d, and 2e of inverter 2 are connected to three armature windings ATU, ATV, and ATW, respectively, of synchronous machine 20. Inverter 2 is a three-phase separately-excited inverter including at least six thyristors U, V, W, X, Y, and Z. Thyristors U, V, and W have anodes each connected to positive-side input terminal 2a and also have cathodes respectively connected to output terminals 2c, 2d, and 2e. Thyristors X, Y, and Z have anodes respectively connected to output terminals 2c, 2d, and 2e and also have cathodes each connected to negative-side input terminal 2b.

Thyristor starter 100 further includes current transformers 4 and 5, a voltage detector 6, a position detector 7, a converter controller 8, and an inverter controller 9.

Current transformer 4 detects a three-phase alternating current flowing from transformer TR to converter 1, and supplies a signal indicating a detection value to converter controller 8.

Current transformer 5 detects currents flowing from inverter 2 through armature windings ATU, ATV, ATW of synchronous machine 20, and supplies signals indicating detection values to position detector 7.

Voltage detector 6 detects instantaneous values of three-phase AC voltages VU, VV, and VW supplied from inverter 2 to synchronous machine 20, and supplies signals indicating the detection values to position detector 7. Specifically, voltage detector 6 detects two line voltages (in Fig. 1, an AC voltage VU-VV between a U phase and a V phase and an AC voltage VV-VW between the V phase and a W phase) among the line voltages of the three-phase AC voltages in armature windings ATU, ATV, ATW of synchronous machine 20. Note that voltage detector 6 may be configured to detect three line voltages (an AC voltage VU-VV between the U phase and the V phase, an AC voltage VV-VW between the V phase and the W phase, and an AC voltage VW-VU between the W phase and the U phase).

In this way, the AC voltages of the U-phase, the V-phase, and the W-phase can be obtained through calculation by detecting at least two line voltages among AC voltage VU-VV between the U-phase and the V-phase, AC voltage VV-VW between the V-phase and the W-phase, and AC voltage VW-VU between the W-phase and the U-phase. Conversion from such line voltages into phase voltages is performed in voltage detector 6 or position detector 7.

Position detector 7 detects the position of the rotor of synchronous machine 20 based on the signals from current transformer 5 and voltage detector 6, and then, supplies a signal indicating the detection value to converter controller 8 and inverter controller 9.

Converter controller 8 controls converter 1 based on the signal from current transformer 4 and the signal from position detector 7. Specifically, converter controller 8 controls the current of converter 1 such that direct current Id output from converter 1 coincides with a prescribed current command value Id*. The internal structure of converter controller 8 will be described later.

Inverter controller 9 controls the firing phase of inverter 2 based on the signal from position detector 7. Specifically, inverter controller 9 includes a control angle calculator 10 and a gate pulse generator 11. Control angle calculator 10 calculates a phase control angle (firing angle) $\gamma$ based on the detected position of the rotor of synchronous machine 20, and then supplies the calculated phase control angle $\gamma$ to gate pulse generator 11. In an intermittent commutation mode, control angle calculator 10 sets phase control angle $\gamma$ at 0°. Based on phase control angle $\gamma$ received from control angle calculator 10, gate pulse generator 11 generates a gate pulse (a firing command) to be applied to the gate of the thyristor in inverter 2.

(Operation of Thyristor Starter)

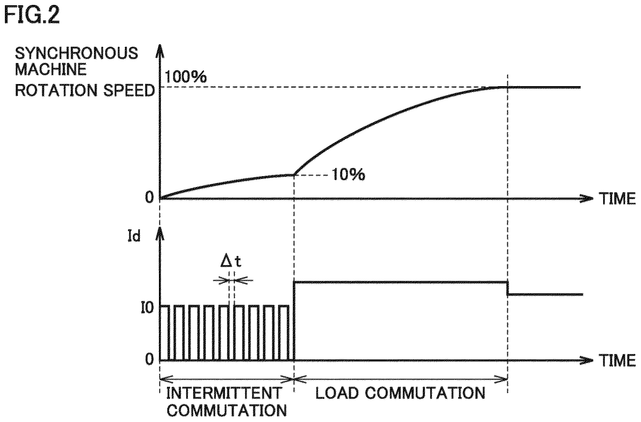

Fig. 2 is a time chart showing the operation of thyristor starter 100. Fig. 2 shows direct current Id output from converter 1 and the rotation speed of synchronous machine 20.

In thyristor starter 100, commutation of the thyristor in inverter 2 is performed using the counter-electromotive force (induced voltage) induced in armature windings ATU, ATV, ATW of synchronous machine 20. Such commutation is called "load commutation".

However, when the rotation speed of synchronous machine 20 is relatively slow, i.e., when synchronous machine 20 is started or operates at a low speed, the induced voltages generated in armature windings ATU, ATV, and ATW are relatively low, with the result that the commutation of the thyristor may fail. Accordingly, when the rotation speed of synchronous machine 20 is relatively slow, "intermittent commutation" is adopted in which commutation of inverter 2 is performed in the state in which direct current Id output from converter 1 is intermittently set to zero (0).

As shown in Fig. 2, thyristor starter 100 is configured to perform commutation while switching the commutation mode sequentially between an intermittent commutation mode (the first mode) and a load commutation mode (the second mode) to thereby accelerate synchronous machine 20 in the stopped state to the rated rotation speed.

Specifically, when synchronous machine 20 in the stopped state is started at time t = 0, thyristor starter 100 adopts the intermittent commutation mode. In the intermittent commutation mode, direct current Id shows a pulse waveform. In the example in Fig. 2, the peak value of each pulse is a fixed value (Id = I0). The peak value is set, for example, such that the integrated value of the AC power supplied to synchronous machine 20 during the time period in the intermittent commutation mode satisfies the amount of power for accelerating synchronous machine 20 in the stopped state to a switching rotation speed. In this case, a quiescent period Δt between pulses is set to a time period required for arc extinction of the thyristor in inverter 2.

When the rotation speed of synchronous machine 20 reaches about 10% of the rated rotation speed, thyristor starter 100 switches the intermittent commutation mode to the load commutation mode.

(Configuration of Converter Controller)

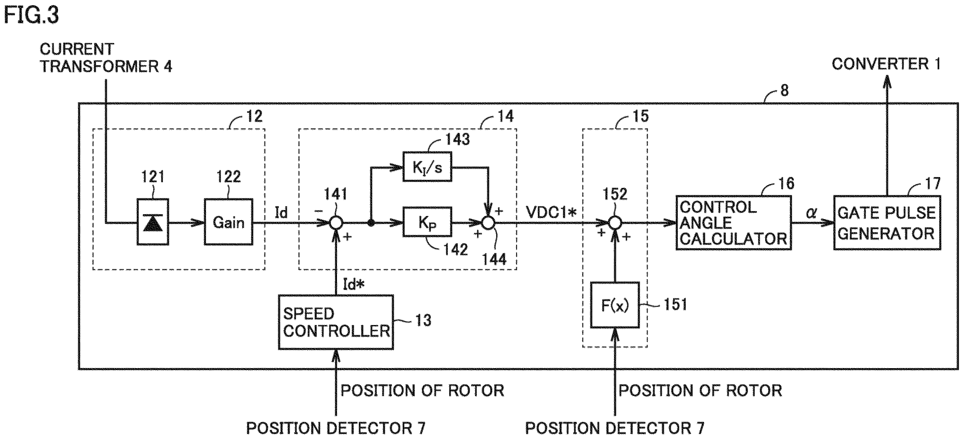

Fig. 3 is a circuit block diagram showing a configuration of converter controller 8. As shown in Fig. 3, converter controller 8 includes a current detector 12, a speed controller 13, a current controller 14, a corrector 15, a control angle calculator 16, and a gate pulse generator 17.

Current detector 12 converts the three-phase alternating current detected by current transformer 4 into direct current Id that is to be output from converter 1.

Current detector 12 includes a rectifier circuit 121 and a gain multiplier 122. Using a full-wave rectification-type diode rectifier, rectifier circuit 121 rectifies the three-phase alternating current received from current transformer 4. Gain multiplier 122 calculates direct current Id by multiplying the output signal from rectifier circuit 121 by a gain.

Speed controller 13 calculates the rotation speed of synchronous machine 20 based on the detected position of the rotor of synchronous machine 20. Based on the calculated rotation speed, speed controller 13 generates current command value Id* that is a target value of direct current Id.

Current controller 14 performs a control operation for causing direct current Id to follow current command value Id* to generate a voltage command value VDC1* for the output voltage of converter 1. Specifically, current controller 14 generates voltage command value VDC1* by performing a control operation using an integral element of a deviation ΔId of direct current Id with respect to current command value Id*.

Current controller 14 includes a subtractor 141, a gain multiplier 142, an integrator 143, and an adder 144. Subtractor 141 calculates deviation ΔId between current command value Id* and direct current Id, and outputs the calculated deviation ΔId to gain multiplier 142 and integrator 143. Gain multiplier 142 multiplies deviation ΔId by a prescribed proportional gain $K_P$. Integrator 143 integrates deviation ΔId with a prescribed integral gain $K_I$. Adder 144 adds the outputs from gain multiplier 142 and integrator 143 to generate voltage command value VDC1*. Voltage command value VDC1* corresponds to a control command for defining a DC voltage VDC1 to be output from converter 1. In this way, current controller 14 performs a proportional-integral (PI) operation to generate voltage command value VDC1*. Note that current controller 14 may be configured to perform proportional-integral-differential (PID) operation.

In addition, converter controller 8 controls DC voltage VDC1 to be larger by a voltage drop by DC reactor 3 than a DC voltage VDC2 across positive-side input terminal 2a and negative-side input terminal 2b of inverter 2 (see Fig. 1). Thereby, direct current Id is controlled.

Corrector 15 corrects voltage command value VDC1* by adding a correction value to voltage command value VDC1* generated by current controller 14.

Corrector 15 includes a correction value calculator 151 and an adder 152. Correction value calculator 151 calculates the rotation speed of synchronous machine 20 based on the position of the rotor of synchronous machine 20 that is detected by position detector 7. Correction value calculator 151 calculates a correction value by inputting the rotation speed to a predetermined correction function F(x). Adder 152 adds the correction value to voltage command value VDC1*.

Correction function F(x) is set based on an explanatory variable x as a rotation speed and an objective variable as a correction value. In the intermittent commutation mode, correction function F(x) is set such that the correction value increases as the rotation speed increases. Thus, in the intermittent commutation mode, the corrector sets the correction value to increase as the rotation speed of synchronous machine 20 increases.

Control angle calculator 16 calculates a phase control angle α of the thyristor in converter 1 based on voltage command value VDC1* to which the correction value is added. Control angle calculator 16 supplies the calculated phase control angle α to gate pulse generator 17. Note that, in the intermittent commutation mode, control angle calculator 16 narrows phase control angle α such that direct current Id becomes zero during quiescent period Δt.

Based on phase control angle α received from control angle calculator 16, gate pulse generator 17 generates a gate pulse (a firing command) to be applied to the gate of the thyristor in converter 1. Converter 1 is switching-controlled in accordance with the gate pulse generated by gate pulse generator 17, and thereby, direct current Id corresponding to current command value Id* is output from converter 1.

(Advantages)

The following describes advantages of thyristor starter 100 according to the first embodiment in comparison with a thyristor starter according to a reference embodiment.

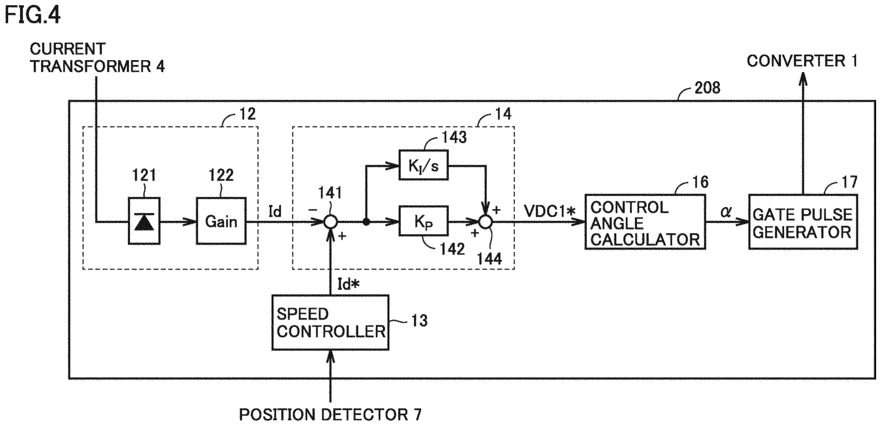

Fig. 4 is a circuit block diagram showing a configuration of a converter controller included in the thyristor starter according to the reference embodiment. The thyristor starter according to the reference embodiment is different from thyristor starter 100 shown in Fig. 1 in that it includes a converter controller 208 shown in Fig. 4 in place of converter controller 8. As shown in Fig. 4, converter controller 208 is different from converter controller 8 shown in Fig. 3 in that it does not include corrector 15.

Each of proportional gain $K_P$ and integral gain $K_I$ of current controller 14 included in each of converter controllers 8 and 208 is a fixed value. Thus, current controller 14 generates the same voltage command value VDC1* as long as deviation ΔId between current command value Id* and direct current Id is the same regardless of the rotation speed of synchronous machine 20. However, DC voltage VDC2 between positive-side input terminal 2a and negative-side input terminal 2b of inverter 2 increases according to the rotation speed of synchronous machine 20. Direct current Id has a value corresponding to a potential difference between DC voltage VDC1 and DC voltage VDC2. Therefore, when DC voltage VDC2 increases as the rotation speed of synchronous machine 20 increases, the potential difference between DC voltage VDC1 and DC voltage VDC2 decreases, and thus, direct current Id is less likely to become close to current command value Id*.

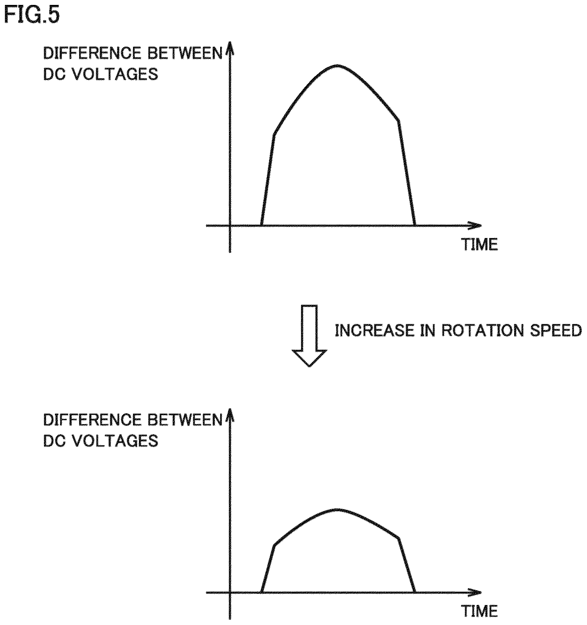

Fig. 5 is a diagram showing a difference (VDC1 - VDC2) between DC voltage VDC1 across positive-side output terminal 1a and negative-side output terminal 1b of converter 1 and DC voltage VDC2 across positive-side input terminal 2a and negative-side input terminal 2b of inverter 2. Fig. 5 shows a temporal change in the difference (VDC1 - VDC2) in one pulse period in the intermittent commutation mode. In Fig. 5, the horizontal axis represents time while the vertical axis represents the difference (VDC1 - VDC2). In Fig. 5, the upper side shows the difference (VDC1 - VDC2) at the time when the rotation speed of synchronous machine 20 is close to zero (0), and the lower side shows the difference (VDC1 - VDC2) at the time when the rotation speed of synchronous machine 20 is close to 10% of the rated rotation speed. As shown in Fig. 5, as the rotation speed increases, the difference (VDC1 - VDC2) decreases. Thus, the current is less likely to flow through DC reactor 3, and direct current Id is less likely to become closer to current command value Id*.

Further, as the rotation speed of synchronous machine 20 increases, deviation ΔId between current command value Id* and direct current Id decreases. Thus, the output of integrator 143 also decreases as the rotation speed of synchronous machine 20 increases. As a result, direct current Id is less likely to become closer to current command value Id*.

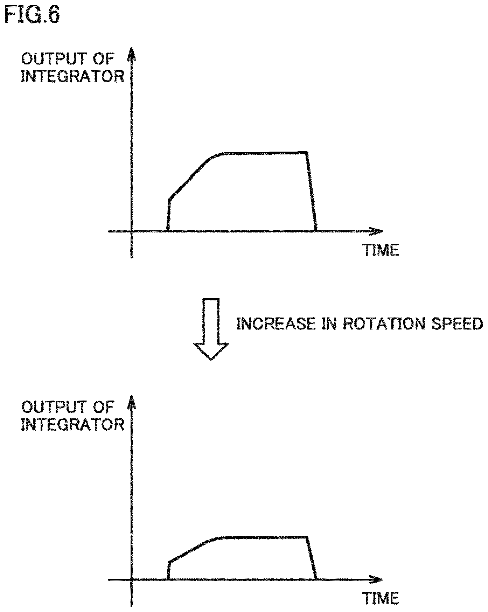

Fig. 6 is a diagram showing an output of integrator 143. Fig. 6 shows a temporal change in the output of integrator 143 during one pulse period in the intermittent commutation mode. In Fig. 6, the horizontal axis represents time while the vertical axis represents the output of integrator 143. In Fig. 6, the upper side shows the output of integrator 143 at the time when the rotation speed of synchronous machine 20 is close to zero (0), and the lower side shows the output of integrator 143 at the time when the rotation speed of synchronous machine 20 is close to 10% of the rated rotation speed. As shown in Fig. 6, as the rotation speed of synchronous machine 20 increases, the output of integrator 143 decreases.

In this way, as the rotation speed of synchronous machine 20 increases, the difference (VDC1 - VDC2) decreases and the output of integrator 143 decreases. As a result, direct current Id is less likely to become closer to current command value Id*.

Converter controller 208 shown in Fig. 4 uses voltage command value VDC1* from current controller 14 as it is to thereby calculate a phase control angle α. Thus, as the rotation speed of synchronous machine 20 increases, the responsiveness of current control to bring direct current Id closer to current command value Id* decreases.

Further, a reference embodiment in which a certain correction value is added to voltage command value VDC1* output from current controller 14 may also be conceivable. Even such a reference embodiment cannot sufficiently suppress the decrease in responsiveness of current control resulting from the increased rotation speed of synchronous machine 20.

On the other hand, in converter controller 8 shown in Fig. 3, a correction value is added to voltage command value VDC1* from current controller 14 to correct voltage command value VDC1*, and then, the corrected voltage command value VDC1* is used to calculate phase control angle α. In the intermittent commutation mode, the correction value is set to increase as the rotation speed of synchronous machine 20 increases. Specifically, corrector 15 sets the correction value to increase as the rotation speed of synchronous machine 20 calculated from the detection signal of position detector 7 increases. Thus, even when the rotation speed of synchronous machine 20 increases, the decrease in responsiveness of current control can be suppressed.

(Correction Function)

When an effective value of the AC voltage input to synchronous machine 20 is defined as Eac, DC voltage VDC2 across positive-side input terminal 2a and negative-side input terminal 2b of inverter 2 satisfies the following relational expression (1).

$$VDC2 = C \times Eac \times \cos\gamma \dots \quad (1)$$

In the relational expression (1), C is a constant and $\gamma$ is a phase control angle of inverter 2. As described above, in the intermittent commutation mode, phase control angle $\gamma$ is set to 0°. Thus, DC voltage VDC2 is proportional to effective value Eac of the AC voltage.

The rotation speed of synchronous machine 20 is proportional to the frequency of the AC voltage input to synchronous machine 20. In order to prevent burnout of synchronous machine 20, inverter controller 9 sets effective value Eac of the AC voltage to be proportional to the frequency of the AC voltage in accordance with the Vf characteristic. Thus, DC voltage VDC2 is proportional to the rotation speed of synchronous machine 20.

The correction value is set to compensate for the increase in DC voltage VDC2 in accordance with the increase in the rotation speed of synchronous machine 20. Thus, correction function F(x) is preferably represented by a linear function. Specifically, correction function F(x) is represented by F(x) = A × x + B. Constants A and B each are determined in advance by experiments or simulations. Note that constant B may be set to zero (0).

[Second Embodiment]

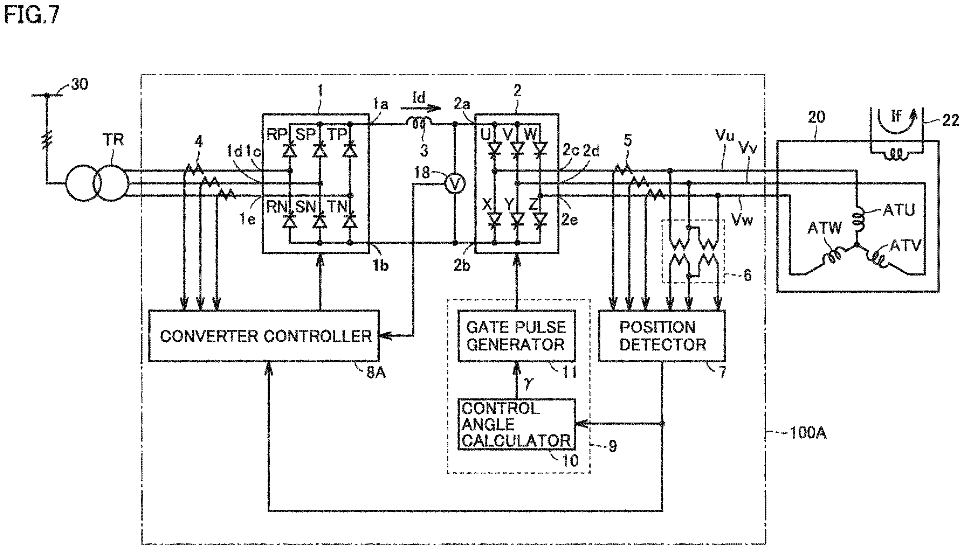

Fig. 7 is a circuit block diagram showing a configuration of a thyristor starter according to the second embodiment. A thyristor starter 100A according to the present second embodiment is different from thyristor starter 100 shown in Fig. 1 in that it includes a converter controller 8A in place of converter controller 8 and additionally includes a voltage detector 18.

Voltage detector 18 detects a DC voltage VDC2 across positive-side input terminal 2a and negative-side input terminal 2b of inverter 2. Voltage detector 18 outputs a detection signal to converter controller 8A.

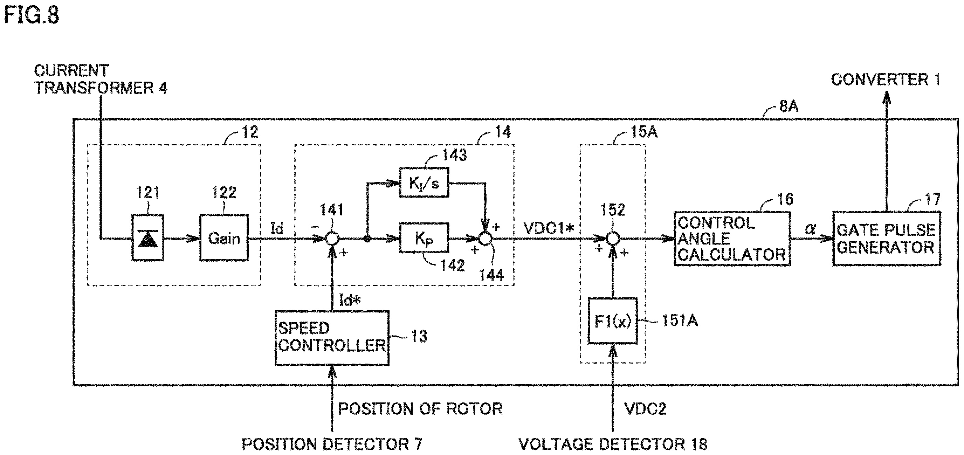

Fig. 8 is a circuit block diagram showing a configuration of converter controller 8A shown in Fig. 7. As shown in Fig. 8, converter controller 8A is different from converter controller 8 shown in Fig. 3 in that it includes a corrector 15A in place of corrector 15.

Corrector 15A includes a correction value calculator 151A and an adder 152. Correction value calculator 151A calculates a correction value by inputting DC voltage VDC2 detected by voltage detector 18 to a predetermined correction function Fi(x). Adder 152 adds the correction value to voltage command value VDC1*.

Correction function Fi(x) is set based on an explanatory variable x as DC voltage VDC2 and an objective variable as a correction value. Correction function Fi(x) is set such that the correction value increases as DC voltage VDC2 increases in the intermittent commutation mode. Thus, corrector 15A sets the correction value to increase as DC voltage VDC2 increases in the intermittent commutation mode.

As described above, DC voltage VDC2 is proportional to the rotation speed of synchronous machine 20. Thus, the correction value is set to increase as the rotation speed of synchronous machine 20 increases in the intermittent commutation mode. Therefore, thyristor starter 100A according to the second embodiment has the same advantage as that of thyristor starter 100 according to the first embodiment.

Note that the correction value is set to compensate for the increase in DC voltage VDC2. Thus, correction function Fi(x) is preferably represented by a linear function. Specifically, correction function Fi(x) is represented by $F_1(x) = A_1 \times x + B_1$. Constants $A_1$ and $B_i$ each are determined in advance by experiments or simulations. Note that constant $B_1$ may be set to zero (0).

[Third Embodiment]

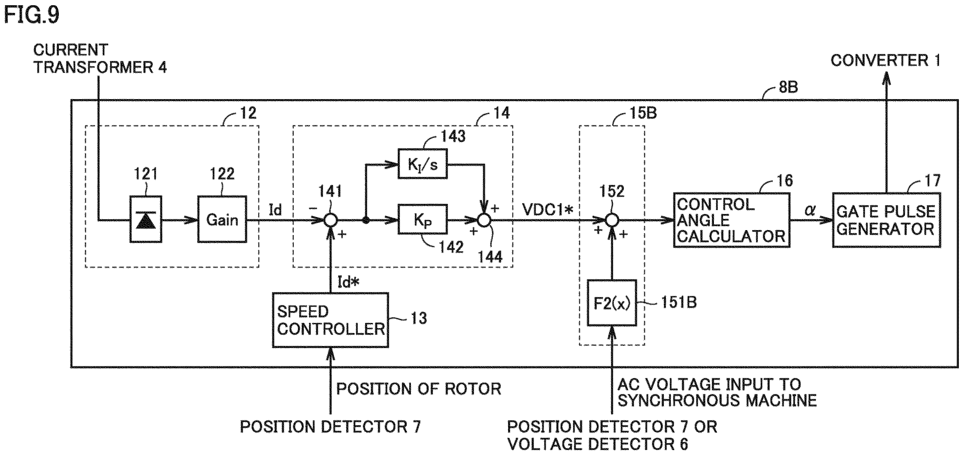

Fig. 9 is a circuit block diagram showing a configuration of a converter controller included in a thyristor starter according to the third embodiment. The thyristor starter according to the third embodiment is different from thyristor starter 100 shown in Fig. 1 in that it includes a converter controller 8B shown in Fig. 9 in place of converter controller 8. As shown in Fig. 9, converter controller 8B is different from converter controller 8 shown in Fig. 3 in that it includes a corrector 15B in place of corrector 15.

Corrector 15B includes a correction value calculator 151B and an adder 152. From position detector 7, correction value calculator 151B receives the detection value detected by voltage detector 6. Note that correction value calculator 151B may receive the detection value directly from voltage detector 6. Based on the received detection value, correction value calculator 151B calculates an effective value Eac of the AC voltage that is to be input to synchronous machine 20. Correction value calculator 151B calculates a correction value by inputting effective value Eac of the AC voltage to a predetermined correction function $F_2(x)$. Adder 152 adds the correction value to voltage command value VDC1*.

Correction function $F_2(x)$ is set based on an explanatory variable x as effective value Eac of the AC voltage input to synchronous machine 20 and an objective variable as a correction value. Correction function $F_2(x)$ is determined such that the correction value increases as effective value Eac of the AC voltage increases in the intermittent commutation mode. Thus, corrector 15B sets the correction value to increase as effective value Eac of the AC voltage increases in the intermittent commutation mode.

As described above, effective value Eac of the AC voltage is proportional to the rotation speed of synchronous machine 20. Thus, the correction value is set to increase as the rotation speed of synchronous machine 20 increases in the intermittent commutation mode. Therefore, the thyristor starter according to the third embodiment has the same advantage as that of thyristor starter 100 according to the first embodiment.

Note that the correction value is set to compensate for the increase in DC voltage VDC2 in accordance with the increase in the rotation speed of synchronous machine 20. As shown in the relational expression (1), DC voltage VDC2 is proportional to effective value Eac of the AC voltage. Thus, correction function $F_2(x)$ is preferably represented by a linear function. Specifically, correction function $F_2(x)$ is represented by $F_2(x) = A_2 \times x + B_2$. Constants $A_2$ and $B_2$ each are determined in advance by experiments or simulations. Note that constant $B_2$ may be set to zero (0).

The first to third embodiments have been described above with regard to the case in which synchronous machine 20 serves as a power generator driven to rotate by a gas turbine in a thermal power plant, but the present disclosure is not limited thereto, and synchronous machine 20 may be a synchronous machine used in the general industrial field. For example, synchronous machine 20 may be a synchronous machine for a cooling blower used in a steel plant.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

REFERENCE SIGNS LIST

1 converter, 1a positive-side output terminal, 1b negative-side output terminal, 1c to 1e input terminal, 2 inverter, 2a positive-side input terminal, 2b negative-side input terminal, 2c to 2e output terminal, 3 DC reactor, 4, 5 current transformer, 6, 18 voltage detector, 7 position detector, 8, 8A, 8B, 208 converter controller, 9 inverter controller, 10, 16 control angle calculator, 11, 17 gate pulse generator, 12 current detector, 13 speed controller, 14 current controller, 15, 15A, 15B corrector, 20 synchronous machine, 22 field winding, 30 AC power supply, 100, 100A thyristor starter, 121 rectifier circuit, 122, 142 gain multiplier, 141 subtractor, 143 integrator, 144, 152 adder, 151, 151A, 151B correction value calculator, ATU, ATV, ATW armature winding, RN, RP, SN, SP, TN, TP, U, V, W, X, Y, Z thyristor, TR transformer.

**Claims**

1. A thyristor starter that starts a synchronous machine, the thyristor starter comprising:

   a converter that converts AC power into DC power;
   a DC reactor that smooths the DC power;
   an inverter that converts the DC power supplied from the converter through the DC reactor into AC power of a variable frequency and supplies the AC power to the synchronous machine; and
   a controller that controls a firing phase of a thyristor in the converter such that a direct current flowing through the DC reactor coincides with a current command value, wherein
   the thyristor starter accelerates the synchronous machine in a stopped state to a prescribed rotation speed by sequentially adopting a first mode and a second mode,

      in the first mode, the thyristor starter performs commutation of the inverter by intermittently setting the direct current to zero, and
      in the second mode, the thyristor starter performs commutation of the inverter by an induced voltage of the synchronous machine,

   the controller includes

      a current controller that generates a voltage command value for an output voltage of the converter by performing a control operation using an integral element of a deviation of the direct current with respect to the current command value,
      a corrector that adds a correction value to the voltage command value, and
      a control angle calculator that calculates a phase control angle of the thyristor in the converter based on the voltage command value to which the correction value is added, and

      in the first mode, the correction value is set to increase as a rotation speed of the synchronous machine increases.

2. The thyristor starter according to claim 1, further comprising a position detector that detects a rotor position of the synchronous machine, wherein the corrector sets the correction value to increase as the rotation speed of the synchronous machine increases, the rotation speed of the synchronous machine being calculated from a detection signal of the position detector.

3. The thyristor starter according to claim 1, further comprising a voltage detector that detects a DC voltage to be input to the inverter, wherein the corrector sets the correction value to increase as the DC voltage increases.

4. The thyristor starter according to claim 1, further comprising a voltage detector that detects an AC voltage to be input to the synchronous machine, wherein the corrector sets the correction value to increase as an effective value of the AC voltage increases.

5. The thyristor starter according to claim 1, wherein the corrector sets the correction value using a linear function, the linear function being set based on

   the rotation speed of the synchronous machine or a value of a parameter varying according to the rotation speed as an explanatory variable, and
   the correction value as an objective variable.

FIG.1

FIG.2

# FIG.3

CURRENT
TRANSFORMER 4

CONVERTER 1

POSITION OF ROTOR

POSITION DETECTOR 7

POSITION OF ROTOR

POSITION DETECTOR 7

EP 4 436 033 A1

FIG.4

CURRENT
TRANSFORMER 4

CONVERTER 1

POSITION DETECTOR 7

SPEED CONTROLLER 13

CONTROL ANGLE CALCULATOR 16

GATE PULSE GENERATOR 17

FIG.5

DIFFERENCE BETWEEN
DC VOLTAGES

TIME

INCREASE IN ROTATION SPEED

DIFFERENCE BETWEEN
DC VOLTAGES

TIME

FIG.6

OUTPUT OF
INTEGRATOR

TIME

⇩ INCREASE IN ROTATION SPEED

OUTPUT OF
INTEGRATOR

TIME

FIG.7

FIG.8

FIG.9

CONVERTER 1

GATE PULSE GENERATOR — 17

α

CONTROL ANGLE CALCULATOR — 16

8B

15B

152  F2(x) — 151B

VDC1*

AC VOLTAGE INPUT TO SYNCHRONOUS MACHINE

POSITION DETECTOR 7 OR VOLTAGE DETECTOR 6

14

143  $K_I/s$

142  $K_P$

144

141

Id

Id*

SPEED CONTROLLER — 13

POSITION OF ROTOR

POSITION DETECTOR 7

CURRENT TRANSFORMER 4

12

122  Gain

121

17

# EP 4 436 033 A1

## INTERNATIONAL SEARCH REPORT

International application No.

**PCT/JP2021/041867**

### A. CLASSIFICATION OF SUBJECT MATTER

*H02P 27/06*(2006.01)i
FI:  H02P27/06

According to International Patent Classification (IPC) or to both national classification and IPC

### B. FIELDS SEARCHED

Minimum documentation searched (classification system followed by classification symbols)

H02P27/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/159346 A1 (TOSHIBA MITSUBISHI ELECTRIC INDUSTRIAL SYSTEMS CO., LTD.) 22 August 2019 (2019-08-22) paragraphs [0054]-[0071], fig. 6, 7 | 1-5 |
| A | WO 2011/132269 A1 (TOYOTA JIDOSHA KABUSHIKI KAISHA) 27 October 2011 (2011-10-27) paragraphs [0080]-[0096], fig. 11, 12 | 1-5 |
| A | JP 2006-320039 A (TOYOTA JIDOSHA KABUSHIKI KAISHA) 24 November 2006 (2006-11-24) paragraphs [0073]-[0110], fig. 6-12 | 1-5 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

18

**INTERNATIONAL SEARCH REPORT**
**Information on patent family members**

International application No.

**PCT/JP2021/041867**

| Patent document cited in search report | | | Publication date (day/month/year) | Patent family member(s) | | | Publication date (day/month/year) |
|---|---|---|---|---|---|---|---|
| WO | 2019/159346 | A1 | 22 August 2019 | US paragraphs [0074]-[0092], fig. 6, 7 | 2021/0091693 | A1 | |
| | | | | EP | 3758217 | A1 | |
| | | | | CN | 111713011 | A | |
| WO | 2011/132269 | A1 | 27 October 2011 | US paragraphs [0116]-[0132], fig. 11, 12 | 2013/0002174 | A1 | |
| | | | | EP | 2562928 | A1 | |
| | | | | CN | 102859866 | A | |
| JP | 2006-320039 | A | 24 November 2006 | US paragraphs [0093]-[0128], fig. 6-12 | 2008/0218111 | A1 | |
| | | | | EP | 1881596 | A1 | |
| | | | | CN | 101288222 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033849 A